# EUROPÄISCHE PATENTSCHRIFT

(11) **EP 3 411 171 B1**
(45) Veröffentlichungstag und Bekanntmachung des Hinweises auf die Patenterteilung: **29.04.2020**
(21) Anmeldenummer: 17709565.0
(22) Anmeldetag: 23.01.2017
(51) Int. Cl.: B22F 3/105, C22C 29/08, B33Y 80/00, B33Y 70/00

(54) **VERFAHREN ZUM SCHICHTWEISEN HERSTELLEN EINES DREIDIMENSIONALEN HARTMETALL-KÖRPERS**
METHOD FOR PRODUCING A THREE-DIMENSIONAL HARD METAL BODY IN LAYERS
PROCÉDÉ DE FABRICATION D'UN CORPS EN MÉTAL DUR TRIDIMENSIONNEL PAR COUCHES

(30) Priorität: 04.02.2016 AT 2016 U
(43) Veröffentlichungstag der Anmeldung: 12.12.2018
(73) Patentinhaber: Ceratizit Austria Gesellschaft m.b.H., 6600 Reutte (AT)
(72) Erfinder: FERSTL, Harald, 87527 Sonthofen (DE); GLÄTZLE, Johannes, 6410 Telfs (AT); RIEDER, Michael, 6604 Höfen (AT); SCHLEINKOFER, Uwe, 6600 Reutte (AT)
(74) Vertreter: Ciesla, Dirk
(86) Internationale Anmeldenummer: PCT/AT2017/000002
(87) Internationale Veröffentlichungsnummer: WO 2017/132710

(56) Entgegenhaltungen:
- WO-A1-2015/194678
- WO-A2-2015/162206
- US-A- 3 595 484
- LAOUI ET AL: "Effect of mechanical alloying on selective laser sintering of WC-9Co powder", POWDER METALLURGY, MANEY PUBLISHING, LONDON, GB , Bd. 42 1. Januar 1999 (1999-01-01), Seiten 203-205, XP008184810, ISSN: 0032-5899 Gefunden im Internet: URL:https://www.scopus.com/record/display. uri?eid=2-s2.0-0242471377&origin=resultsli st&sort=plf-f&src=s&sid=95D4676D1DB704D2DA 0646FFBCC14FDE.wsnAw8kcdt7IPYLO0V48gA% 3a770&sot=autdocs&sdt=autdocs&sl=17&s=AU-I D%286603858327%29&relpos=88&citeCnt=21 &searchTerm=
- ECKART UHLMANN ET AL: "Investigation on Additive Manufacturing of Tungsten Carbide-cobalt by Selective Laser Melting", PROCEDIA CIRP, Bd. 35, Nr. 35, 15. Januar 2015 (2015-01-15), Seiten 8-15, XP055378530, NL ISSN: 2212-8271, DOI: 10.1016/j.procir.2015.08.060
- AL-AQEELI N ET AL: "VC and Cr3C2doped WC-based nano-cermets prepared by MA and SPS", CERAMICS INTERNATIONAL, Bd. 40, Nr. 8, 13. April 2014 (2014-04-13) , Seiten 11759-11765, XP028862425, ISSN: 0272-8842, DOI: 10.1016/J.CERAMINT.2014.04.004

## Beschreibung

Die vorliegende Erfindung betrifft ein Verfahren zum schichtweisen Herstellen eines dreidimensionalen Hartmetall-Körpers sowie eine Verwendung eines SES-Hartmetall-Pulvers (SES = Selektives Energiestrahl-Sintern) zum Herstellen dreidimensionaler Hartmetall-Körper.

Neben traditionellen Verfahren zum Erzeugen von Körpern mit komplexen Geometrien, die die komplexen Geometrien durch materialabtragende Bearbeitung, wie insbesondere z.B. Zerspanung, erzeugen (subtraktive Bearbeitung), geht in den letzten Jahren ein Trend in Richtung zu additiven Verfahren, bei denen das Material des Körpers sukzessive hinzugefügt wird, um die gewünschte Geometrie zu erzeugen (additive Bearbeitung).

Dabei finden insbesondere solche Verfahren immer weitere Verbreitung, bei denen dreidimensionale Körper durch schichtweises Verfestigen an den dem Querschnitt des Körpers in der jeweiligen Schicht entsprechenden Stellen mittels eines gerichteten Energiestrahls aufgebaut werden. Der gerichtete Energiestrahl ist dabei in den meisten Fällen ein Laserstrahl, wobei teilweise z.B. auch ein Elektronenstrahl zum Einsatz kommt. Bei einer Verwendung eines Laserstrahls wird dieses Verfahren auch als "selektives Lasersintern" (SLS) bezeichnet, bei einer Verwendung eines Elektronenstrahls als "selektives Elektronenstrahlsintern". Vorliegend werden diese Verfahren zusammenfassend als "selektives Energiestrahlsintern" (SES) bezeichnet, wobei der Energiestrahl durch einen Laserstrahl oder einen Elektronenstrahl gebildet sein kann. In dem vorliegenden Zusammenhang wird der Begriff "Sintern" ferner so verwendet, dass er sowohl Festphasensintern als auch Flüssigphasensintern umfasst.

In der Vergangenheit wurden bereits teilweise Versuche unternommen, auch Hartmetall-Körper mittels selektivem Energiestrahlsintern zu fertigen, insbesondere mittels SLS. Hartmetall (oftmals auch als "cemented carbide" bezeichnet) ist ein Verbundwerkstoff, bei dem harte Teilchen, die üblicherweise durch Metallkarbide oder Metallkarbonitride gebildet sind, in einem duktilen metallischen Binder aus Co, Ni oder einer Basis-Legierung von diesen eingebettet sind. Basis-Legierung eines Metalls bedeutet dabei, dass dieses Metall den Hauptbestandteil der Legierung bildet. Der Anteil der harten Teilchen in Gew.-% an dem Hartmetall überwiegt den Anteil des Binders in Gew.-%. Am weitesten verbreitet ist Hartmetall, bei dem die harten Teilchen überwiegend durch WC (Wolframkarbid) gebildet sind und der Binder durch Co- oder eine Co-Basis-Legierung gebildet ist, wobei insbesondere in geringeren Mengen auch weitere harte Teilchen (insbesondere kubische Karbide der Metalle der Gruppen IV bis VI des Periodensystems der Elemente) vorhanden sein können und der metallische Binder insbesondere auch weitere darin gelöste Metalle in geringeren Mengen aufweisen kann.

"Manufacturing of WC-Co moulds using SLS machine" by S. Kumar (Journal of Mat. Proc. Techn. 209 (2009), 3840-3848) beschreibt z.B. Versuche, Hartmetall-Körper mittels eines SLS-Verfahrens herzustellen. Bei dem beschrieben Verfahren wurden poröse Hartmetall-Körper erzeugt, die anschließend z.B. mit einem weiteren Material infiltriert wurden, um die Hohlräume zumindest teilweise zu verfüllen. Der resultierende Körper reicht jedoch bei Weitem nicht an die mechanischen Eigenschaften herkömmlich hergestellter Hartmetall-Körper heran.

"Effect of mechanical alloying on selective laser sintering of WC-9Co powder" von Laoui et al. (POWDER METALLURGY, Bd. 42, 1999, Seiten 203-205, ISSN: 0032-5899) beschreibt Experimente zum Lasersintern von zweidimensionalen Hartmetallpulver-Schichten, bei denen mechanisch legierte Pulver zum Einsatz kommen.

WO 2015/194678 A1 beschreibt ein Pulvermaterial für ein additives Herstellungsverfahren, das aus Partikeln in Form von Sekundärpartikeln gebildet ist, die durch dreidimensional mit Zwischenräumen verbundene Primärpartikel gebildet sind.

"Investigation on Additive Manufacturing of Tungsten Carbide -cobalt by Selective Laser Melting" von E. Uhlmann (PROCEDIA CIRP, Bd. 35, Nr. 35 (2015), ISSN: 2212-8271) beschreibt ein Verfahren nach dem Oberbegriff von Anspruch 1 und eine Verwendung nach dem Oberbegriff von Anspruch 8.

WO 2015/162206 A2 beschreibt ein Verfahren zum Herstellen von dichtem und kugelförmigem Hartmetall-Granulat und eine Verwendung des Pulvers bei einem additiven Herstellungsverfahren.

Es ist Aufgabe der vorliegenden Erfindung ein verbessertes Verfahren zum schichtweisen Herstellen eines dreidimensionalen Hartmetall-Körpers und eine Verwendung eines verbesserten SES-Hartmetall-Pulvers bereitzustellen.

Die Aufgabe wird durch ein Verfahren zum schichtweisen Herstellen eines dreidimensionalen Hartmetall-Körpers durch schichtweises Verfestigen an den dem Querschnitt des Hartmetall-Körpers in der jeweiligen Schicht entsprechenden Stellen nach Anspruch 1 gelöst. Vorteilhafte Weiterbildungen sind in den abhängigen Ansprüchen angegeben.

Der gerichtete Energiestrahl kann durch einen Laserstrahl oder durch einen Elektronenstrahl gebildet sein, bevorzugt durch einen Laserstrahl. Das selektive, lokale Verfestigen kann insbesondere durch ein lokales Aufschmelzen von zumindest einer Komponente des Bindemetalls erfolgen. Da die Partikel des Hartmetall-Pulvers bereits eine zusammengesinterte WC-Bindemetall-Struktur aufweisen, bei der das Bindemetall, das insbesondere durch eine Cobalt-Basislegierung gebildet sein kann, die WC-Körner bereits benetzt, wird auch bei einem nur sehr kurzzeitigen lokalen Aufschmelzen des Bindemetalls durch den gerichteten Energiestrahl ein homogenes Hartmetallgefüge des dreidimensionalen Hartmetall-Körpers erzielt. Ferner weisen die WC-Körner in dem gesinterten Zustand auch eine für das SES-Verfahren vorteilhafte bereits rekristallisierte eckige Kornform auf, die sich wesentlich von z.B. lediglich beschichtetem WC-Rohmaterial unterscheidet. Die zusammengesinterte WC-Bindemetall-Struktur ist das Resultat eines vorgeschalteten Flüssigphasen-Sinterprozesses, sodass die Partikel bereits flüssigphasen-gesintert sind.

Bevorzugt ist das Bindemetall eine Cobalt-Basislegierung, bei der Cobalt den Hauptbestandteil bildet. Insbesondere in diesem Fall werden ein besonders gutes Sinterverhalten und vorteilhafte Eigenschaften des erzeugten Hartmetall-Körpers erreicht. Die Cobalt-Legierung kann insbesondere neben Cobalt weitere Elemente wie Wolfram etc. in gelöster Form aufweisen. Ferner kann das Bindemetall auch geringere Mengen an Ni und Fe aufweisen. Bevorzugt kann der Cobalt-Anteil dabei mehr als 70 Gew.-% des Bindemetalls betragen, bevorzugt mehr als 80 Gew.-%. Für den Einsatz in einem SES-Verfahren bieten sich insbesondere relativ hohe Gehalte an Bindemetall in dem Hartmetall an, wie z.B. zwischen 12 und 30 Gew.-% des Hartmetalls.

Die Partikel weisen zumindest Cr und V auf. Somit sind auch diese das Hartmetall-Gefüge u.a. z.B. als Kornwachstumshemmer positiv beeinflussenden weiteren Bestandteile bereits in dem Pulver fein verteilt vorhanden und folglich auch nach der Einwirkung des Energiestrahls in dem gebildeten dreidimensionalen Hartmetall-Körper homogen verteilt. Die weiteren Elemente sind in den Partikeln des Pulvers dabei ebenfalls bereits in gesintertem Zustand enthalten, zumindest teilweise auch in bereits in dem Bindemetall gelöster Form. Wolframkarbid, Bindemetall und die weiteren Elemente liegen folglich in dem Hartmetall-Pulver nicht in Form eines Gemisches separat nebeneinander vor, sondern in bereits flüssigphasen-gesinterter Form miteinander verbunden. Die weiteren Elemente liegen dabei in wesentlich geringerer Menge als das eigentliche Bindemetall vor.

Die Partikel des Hartmetall-Pulvers weisen zumindest Cr und V auf. Insbesondere das fein verteilte Vorhandensein von Cr in Verbindung mit einem der weiteren Elemente in den Partikeln wirkt sich besonders positiv auf das erzielbare Gefüge des dreidimensionalen Hartmetall-Körpers aus. Die Partikel weisen zumindest Cr und V auf, da sich dies besonders vorteilhaft auf das erzielbare Gefüge auswirkt.

Das Hartmetall-Pulver weist einen Cr-Gehalt von 0,05 - 2,0 Gew.-%, bevorzugt von 0,10 -1,0 Gew.-% auf. Es hat sich gezeigt, dass sich dieser Bereich besonders vorteilhaft auf die resultierenden dreidimensionalen Hartmetall-Körper auswirkt. Das Hartmetall-Pulver weist einen V-Gehalt von 0,01 - 1,0 Gew.-% auf, bevorzugt von 0,01 - 0,5 Gew.-%. Der Cr-Gehalt (in Gew.-%) ist zumindest zweimal so groß wie der V-Gehalt (in Gew.-%), bevorzugt zumindest fünfmal so groß. Die Messung der Anteile der einzelnen Elemente kann insbesondere durch Röntgen-Fluoreszenz-Analyse (RFA) erfolgen.

Gemäß einer Weiterbildung ist das Hartmetall-Pulver ein mittels des Zink-Recycling-Prozesses recyceltes Hartmetall-Pulver. In diesem Fall lässt sich eine besonders günstige homogene Verteilung der Bestandteile des Hartmetall-Pulvers in einfacher und kostengünstiger Weise erreichen. Die genaue Zusammensetzung des Hartmetall-Pulvers lässt sich dabei gezielt über die Hartmetall-Sorten steuern, die dem Zink-Recycling-Prozess als Ausgangsmaterial zugeführt werden. Bei dem Zink-Recycling-Prozess handelt es sich um einen gebräuchlichen Prozess zur Aufbereitung von Hartmetall, bei dem Hartmetall mit geschmolzenem Zink aufgeschlossen wird und das Zink anschließend wieder herausdestilliert wird. Eine mögliche Ausführung dieses Prozesses ist z.B. in US 3,595,484 A beschrieben.

Gemäß einer Weiterbildung weist das Verfahren ferner die Schritte auf: Entfernen von unverfestigtem Hartmetall-Pulver und anschließendes Nachverdichten des dreidimensionalen Hartmetall-Körpers. Durch diese nachfolgenden Schritte nach dem eigentlichen selektiven Energiestrahl-Sintern (SES) können Hartmetall-Körper erzeugt werden, deren Eigenschaften denen herkömmlich erzeugter Hartmetall-Körper zumindest sehr nahe kommen.

Ein SES-Hartmetall-Pulver zum Erzeugen eines dreidimensionalen Hartmetall-Körpers durch schichtweises Verfestigen an den dem Querschnitt des Hartmetall-Körpers in der jeweiligen Schicht entsprechenden Stellen mittels eines Energiestrahls weist Partikel mit zusammengesinterter WC-Bindemetall-Struktur auf. Da die Partikel des SES-Hartmetall-Pulvers bereits eine zusammengesinterte WC-Bindemetall-Struktur aufweisen, bei der das Bindemetall, das insbesondere durch eine Cobalt-Basislegierung gebildet sein kann, die WC-Körner bereits benetzt und die WC-Körner bereits eine rekristallisierte eckige Kornform aufweisen, kann auch mit einem nur sehr kurzzeitigen lokalen Aufschmelzen des Bindemetalls durch einen gerichteten Energiestrahl ein homogeneres Hartmetallgefüge eines dreidimensionalen Hartmetall-Körpers erzielt werden.

Die Partikel weisen zumindest Cr und V auf. Es hat sich gezeigt, dass insbesondere das fein verteilte Vorhandensein von Cr in Verbindung mit einem der weiteren Elemente besonders vorteilhaften Einfluss auf die Verarbeitung in einem SES-Verfahren hat.

Gemäß einer Weiterbildung weisen die Partikel eine mittlere Partikelgröße < 200 µm, bevorzugt < 100 µm, mehr bevorzugt < 50 µm auf. Die Partikelgröße ist dabei nach DIN ISO 13320-1 (Fraunhofer Modell) zu bestimmen. Es hat sich gezeigt, dass insbesondere mit dieser Partikelgröße eine besonders vorteilhafte

Verarbeitung in einem SES-Verfahren erfolgen kann. Bevorzugt ist die mittlere Partikelgröße ferner > 2 µm, bevorzugt > 3 µm.

Gemäß einer Weiterbildung ist das SES-Hartmetall-Pulver ein mittels des Zink-Recycling-Prozesses recyceltes Hartmetall-Pulver. In diesem Fall lässt sich eine besonders günstige homogene Verteilung der Bestandteile des SES-Hartmetall-Pulvers in einfacher und kostengünstiger Weise erreichen. Die genaue Zusammensetzung des SES-Hartmetall-Pulvers lässt sich dabei gezielt über die Hartmetall-Sorten steuern, die dem Zink-Recycling-Prozess als Ausgangsmaterial zugeführt werden.

Die Aufgabe wird auch durch eine Verwendung eines SES-Hartmetall-Pulvers zum Herstellen dreidimensionaler Hartmetall-Körper gemäß Anspruch 8 gelöst.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung einer Vorrichtung zum schichtweisen Herstellen eines dreidimensionalen Objektes durch schichtweises Verfestigen eines Ausgangspulvers an den dem Querschnitt des Objektes in der jeweiligen Schicht entsprechenden Stellen;
- Fig. 2:: eine rasterelektronenmikroskopische Aufnahme mit 20.000-facher Vergrößerung eines in Kunststoff eingebetteten und geschliffenen herkömmlichen Wolframkarbidpulvers;
- Fig. 3:: eine rasterelektronenmikroskopische Aufnahme mit 2.000-facher Vergrößerung eines in Kunststoff eingebetteten und geschliffenen SES-Hartmetall-Pulvers gemäß einer Ausführungsform; und
- Fig. 4:: eine rasterelektronenmikroskopische Aufnahme mit 20.000-facher Vergrößerung des eingebetteten und geschliffenen SES-Hartmetall-Pulvers.

### AUSFÜHRUNGSFORM

Eine Ausführungsform wird im Folgenden unter Bezugnahme auf die Figuren beschrieben. Zunächst wird dabei kurz der Aufbau einer Vorrichtung 1 zum schichtweisen Herstellen eines dreidimensionalen Objektes durch schichtweises Verfestigen eines Ausgangspulvers an den dem Querschnitt des Objektes in der jeweiligen Schicht entsprechenden Stellen beschrieben.

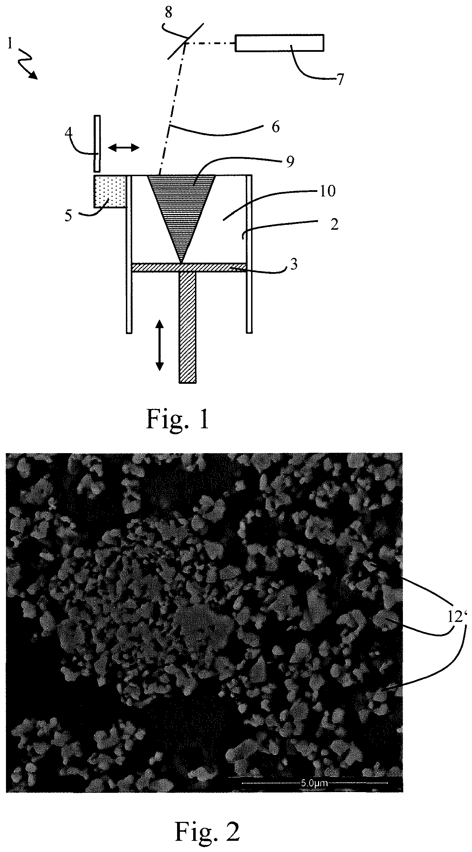

Bei der in Fig. 1 schematisch dargestellten Vorrichtung 1 handelt es sich um eine Vorrichtung zum selektiven Energiestrahlsintern (SES), bei dem Ausgangspulver jeweils lokal mit einem gerichteten Energiestrahl zumindest partiell aufgeschmolzen wird, um dieses zu verfestigen. Als gerichteter Energiestrahl kann dabei insbesondere ein Laserstrahl oder ein Elektronenstrahl zum Einsatz kommen, um den benötigten lokalen Energieeintrag zu bewirken.

Die SES-Vorrichtung 1 weist einen Bauraum 2 auf, der durch eine umlaufende Seitenwand begrenzt ist und dessen Grundfläche 3 durch eine entsprechende Antriebsvorrichtung höhenverstellbar ausgebildet ist, wie in Fig. 1 schematisch durch einen Doppelpfeil dargestellt ist. Es ist ferner eine Auftragevorrichtung 4 für Ausgangspulver vorgesehen, mittels der Ausgangspulver aus einem Pulverreservoir 5 als Schicht auf der Grundfläche 3 oder auf darauf bereits ausgebildeten Schichten aufgebracht werden kann. Dies ist in Fig. 1 ebenfalls nur schematisch durch einen Doppelpfeil dargestellt, da derartige Vorrichtungen im Stand der Technik bereits ausführlich beschrieben und kommerziell erhältlich sind. Ein gerichteter Energiestrahl 6 wird von einer Strahlquelle 7 bereitgestellt, die z.B. durch einen Laser oder eine Elektronenkanone gebildet sein kann. Eine in Fig. 1 ebenfalls schematisch dargestellte Strahlenoptik 8 ist derart ausgebildet, dass der gerichtete Energiestrahl 6 gezielt über ausgewählte Stellen der in dem Bauraum 2 ausgebildeten Pulverschicht gerastert werden kann, um das Ausgangspulver lokal zu verfestigen.

Im Betrieb der SES-Vorrichtung 1 wird die Grundfläche 3 zunächst um eine Höhe, die der Dicke einer aufzubringenden Schicht aus Ausgangspulver entspricht, abgesenkt. Auf der Grundfläche 3 wird eine Schicht des Ausgangspulvers mit der Auftragevorrichtung 4 aufgebracht und anschließend wird das aufgetragene Ausgangspulver der Schicht an den Stellen, die einem Querschnitt des zu erzeugenden Objektes entsprechen mittels des gerichteten Energiestrahls 6 verfestigt. Nachfolgend wird die Grundfläche 3 erneut etwas abgesenkt und mittels der Auftragevorrichtung 4 wird auf der bereichsweise verfestigten ersten Schicht eine weitere Schicht des Ausgangspulvers aufgebracht, die anschließend wiederum an den gewünschten, dem Querschnitt des zu erzeugenden Objektes in der Schicht entsprechenden Stellen mittels des gerichteten Energiestrahls 6 lokal verfestigt wird.

Die zuvor beschriebenen Schritte werden vielfach wiederholt, um sukzessiv in dem Bauraum 2 das gewünschte dreidimensionale Objekt schichtweise aufzubauen. Wie nachfolgend noch eingehender beschrieben wird, erfolgt bei der Ausführungsform der Aufbau mit einem speziellen SES-Hartmetall-Pulver als Ausgangspulver und das erzeugte dreidimensionale Objekt ist ein Hartmetall-Körper 9. Nach dem Durchlaufen der zuvor beschriebenen Herstellungsschritte befindet sich der erzeugte Hartmetall-Körper 9 zunächst in einem Pulverbett aus unverfestigtem SES-Hartmetall-Pulver 10, aus dem der Hartmetall-Körper 9 dann für eine weitere Bearbeitung entnommen werden kann.

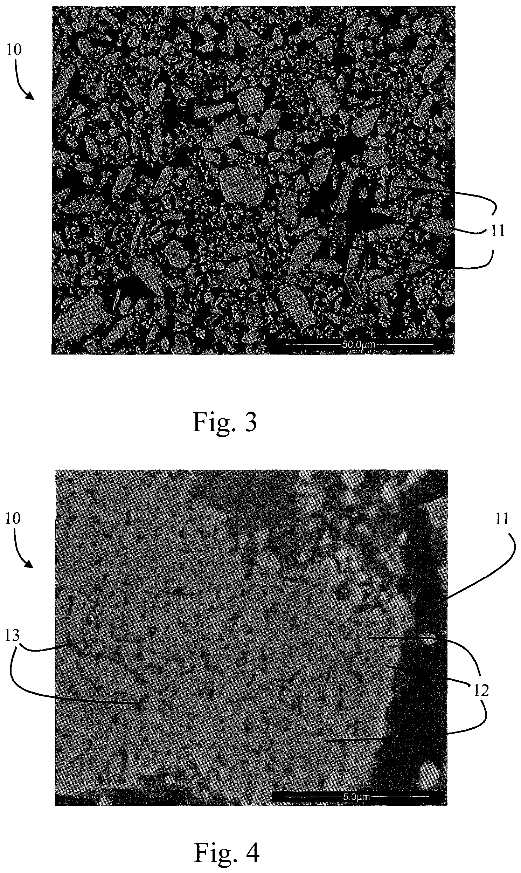

Bei der Ausführungsform kommt ein spezielles SES-Hartmetall-Pulver 10 zum Einsatz, das Partikel mit einer zusammengesinterten WC-Bindemetall-Struktur aufweist, die dadurch bedingt ist, dass das Material bereits einen Flüssigphasen-Sinterprozess durchlaufen hat. Rasterelektronenmikroskopische Aufnahmen eines Beispiels des SES-Hartmetall-Pulvers 10, das in Kunststoff eingebettet und geschliffen wurde, sind in den Fig. 3 und Fig. 4 zu sehen. Wie in den Fig. 3 und Fig. 4 zu sehen ist, weist das SES-Hartmetall-Pulver 10 Partikel 11 auf, die eine zusammengesinterte WC-Bindemetall-Struktur aufweisen. Die Partikel 11 des SES-Hartmetall-Pulvers 10 weisen zumindest überwiegend eine Mehrzahl von WC-Körnern 12 auf, die mit dem Bindemetall 13 benetzt und durch dieses verbunden sind. Bei dem konkret dargestellten Beispiel ist das Bindemetall 13 insbesondere durch eine Cobalt-Basislegierung gebildet, die überwiegend aus Co mit geringeren Mengen anderer Elemente besteht, die noch eingehender genannt werden.

Wie insbesondere in Fig. 3 zu sehen ist, weisen die Partikel 11 des SES-Hartmetall-Pulvers 10 eine unrunde Form auf. Die einzelnen WC-Körner 12 haben bei der zusammengesinterten WC-Bindemetall-Struktur ferner eine eckige Querschnittsform, die grundlegend von der im Wesentlichen runden Kornform der WC-Körner 12' bei einem herkömmlichen Wolframkarbidpulver abweicht, wie durch einen Vergleich mit Fig. 2 zu sehen ist.

Die Partikel 11 des SES-Hartmetall-Pulvers 10 haben eine mittlere Partikelgröße < 200 µm, bei dem speziellen Beispiel insbesondere sogar < 50 µm, wie z.B. auch in Fig. 3 zu sehen ist. Das SES-Hartmetall-Pulver 10 gemäß der Ausführungsform weist ferner neben den WC-Körnern 12 und dem Grundmaterial des Bindemetalls 13 noch weitere Elemente auf, die sich positiv auf das erreichbare Gefüge des zu erzeugenden Hartmetall-Körpers 9 auswirken. Das SES-Hartmetall-Pulver 10 weist zumindest zwei der Elemente Cr, V, Al, Mo, Nb, Ta, Ti auf. Diese Elemente liegen dabei fein verteilt in den Partikeln 11 des SES-Hartmetall-Pulvers 10 vor und insbesondere nicht nur in mit diesem vermischter Form. Insbesondere Cr und Mo liegen dabei in gelöster Form in dem Bindemetall 13 vor, das bevorzugt überwiegend aus Cobalt besteht. V, Nb, Ta, Ti liegen bevorzugt als Metallkarbide vor, die ebenfalls fein in den Partikeln 11 des SES-Hartmetall-Pulvers 10 verteilt sind.

Die weiteren Elemente liegen homogen verteilt in dem SES-Hartmetall-Pulver 10 vor. Neben den ausdrücklich genannten Elementen können ggfs. auch noch andere Elemente in Spuren vorliegen.

Das SES-Hartmetall-Pulver 10 gemäß der Ausführungsform kann insbesondere bevorzugt mittels des Zink-Recycling-Prozesses aus Hartmetall hergestellt werden, das bereits die gewünschte Zusammensetzung aufweist. Insbesondere über die Herstellung mittels des Zink-Recycling-Prozesses gelingt es, die vorteilhafte Kornform der WC-Körner 12, die zuverlässige Benetzung der WC-Körner 12 mit dem Bindemetall 13 und die homogene Verteilung der weiteren Elemente in den Partikeln 11 des SES-Hartmetall-Pulvers 10 zu erreichen.

Das SES-Hartmetall-Pulver 10 wird dabei derart gewählt, dass es Cr (Chrom) aufweist, insbesondere mit einem Cr- Gehalt zwischen 0,05 und 2,0 Gew.-%, bevorzugt zwischen 0,10 und 1,0 Gew.-%. Durch die homogene feine Verteilung von Cr in den Partikeln 11 des SES-Hartmetall-Pulvers 10 wird einem unerwünschten Kornwachstum der WC-Körner 12 bei der Herstellung des Hartmetall-Körpers 9 sehr effektiv entgegengewirkt. Das SES-Hartmetall-Pulver 10 und die Ausgangsstoffe für dessen Herstellung werden derart gewählt, dass es zusätzlich auch V (Vanadium) aufweist, insbesondere mit einem V-Gehalt zwischen 0,01 und 1,0 Gew.-%, bevorzugt zwischen 0,01 und 0,5 Gew.-%. Das Vanadium liegt dabei bevorzugt fein verteilt an den Korngrenzen in den Partikeln 11 des SES-Hartmetall-Pulvers 10 vor.

Durch die Verwendung des SES-Hartmetall-Pulvers 10 gemäß der Ausführungsform bei dem zuvor beschriebenen SES-Verfahren wird erreicht, dass auch bei nur einem kurzen lokalen Aufschmelzen von z.B. nur einem Teil des Bindemetalls während des schichtweisen Herstellens ein sehr homogenes Gefüge des resultierenden Hartmetall-Körpers 9 erzielt werden kann. Insbesondere wird erreicht, dass die WC-Körner die gewünschte rekristallisierte eckige Form annehmen, die auch bei mit herkömmlichen Sinterverfahren hergestelltem Hartmetall auftritt, und es wird eine sehr feine und homogene Verteilung der weiteren Elemente erzielt.

Nach dem Durchführen des schichtweisen Verfestigens mittels des gerichteten Energiestrahls 6 weist der erzeugte Hartmetall-Körper 9 noch eine Porosität auf, die über der von konventionell erzeugten Hartmetall-Körpern liegen kann. Bei der Ausführungsform erfolgt daher noch ein weiteres Verdichten des gebildeten Hartmetall-Körpers 9, um die Porosität weiter zu verringern. Zu diesem Zweck wird der Hartmetall-Körper 9 aus dem Pulverbett entnommen und das unverfestigte Hartmetall-Pulver 10 wird entfernt, was z.B. unter Zuhilfenahme von Druckluft, Bürsten, Pinseln oder Ähnlichem erfolgen kann. Das daran anschließende Nachverdichten kann dann z.B. mittels heißisostatischem Pressen (HIP) oder ähnlichem erfolgen. Aufgrund der zusammengesinterten WC-Bindemetall-Struktur von bereits dem als Ausgangspulver verwendeten SES-Hartmetall-Pulver 10 kann in dieser Weise über das SES-Verfahren ein Hartmetall-Körper 9 erzeugt werden, dessen Gefüge dem Gefüge eines auf herkömmlichem Weg erzeugten Hartmetall-Körpers zumindest sehr ähnlich ist. Insbesondere wird eine sehr homogene Verteilung auch der weiteren Elemente in dem Hartmetall-Körper 9 erreicht.

Obwohl in Bezug auf die Ausführungsform lediglich eine Cobalt-Basislegierung als Bindemetall beschrieben wurde, kann das Bindemetall z.B. auch durch eine Nickel-Basislegierung gebildet sein. Die zuvor beschriebenen Partikel 11 des SES-Hartmetall-Pulvers 10 können in dem Pulver insbesondere in Form von Granulat mit annähernd sphärischer Form der Granulat-Teilchen vorliegen, die jeweils eine Mehrzahl von Partikeln 11 aufweisen.

## Patentansprüche

1. Verfahren zum schichtweisen Herstellen eines Hartmetall-Körpers (9) durch schichtweises Verfestigen an den dem Querschnitt des Hartmetall-Körpers (9) in der jeweiligen Schicht entsprechenden Stellen, mit den Schritten:
sukzessives, schichtweises Erzeugen eines dreidimensionalen Hartmetall-Körpers (9) durch abwechselndes schichtweises Aufbringen eines Hartmetall-Pulvers (10) und selektives, lokales Verfestigen des aufgebrachten Hartmetall-Pulvers (10) durch Einwirkung eines gerichteten Energiestrahls (6),
wobei das Hartmetall-Pulver (10) Partikel (11) mit zusammengesinterter WC-Bindemetall-Struktur aufweist,
**dadurch gekennzeichnet, dass** die Partikel (11) zumindest Cr und V aufweisen, das Hartmetall-Pulver (10) einen Cr-Gehalt von 0,05 - 2,0 Gew.-% und einen V-Gehalt von 0,01 - 1 Gew.-% aufweist und der Cr-Gehalt in Gew.-% zumindest zweimal so groß wie der V-Gehalt in Gew.-% ist.

2. Verfahren nach Anspruch 1, wobei das Bindemetall eine Cobalt-Basislegierung ist.

3. Verfahren nach einem der vorangehenden Ansprüche, wobei das Hartmetall-Pulver (10) einen Cr-Gehalt von 0,1 - 1,0 Gew.-% aufweist.

4. Verfahren nach einem der vorangehenden Ansprüche, wobei das Hartmetall-Pulver (10) einen V-Gehalt von 0,01 - 0,5 Gew.-% aufweist.

5. Verfahren nach einem der vorangehenden Ansprüche, wobei das Hartmetall-Pulver (10) ein mittels des Zink-Recycling-Prozesses recyceltes Hartmetall-Pulver ist.

6. Verfahren nach einem der vorangehenden Ansprüche, wobei das Verfahren ferner die Schritte aufweist:
Entfernen von unverfestigtem Hartmetall-Pulver (10) und anschließendes Nachverdichten des dreidimensionalen Hartmetall-Körpers (9).

7. Verwendung eines SES-Hartmetall-Pulver (10), SES = Selektives Energiestrahl-Sintern, zum Erzeugen eines dreidimensionalen Hartmetall-Körpers (9) durch schichtweises Verfestigen an den dem Querschnitt des Hartmetall-Körpers (9) in der jeweiligen Schicht entsprechenden Stellen mittels eines gerichteten Energiestrahls (6), wobei das SES-Hartmetall-Pulver Partikel (11) mit zusammengesinterter WC-Bindemetall-Struktur aufweist,
**dadurch gekennzeichnet, dass** die Partikel (11) zumindest Cr und V aufweisen, das Hartmetall-Pulver (10) einen Cr-Gehalt von 0,05 - 2,0 Gew.-% und einen V-Gehalt von 0,01 - 1 Gew.-% aufweist und der Cr-Gehalt in Gew.-% zumindest zweimal so groß wie der V-Gehalt in Gew.-% ist.

8. Verwendung nach Anspruch 7, wobei die Partikel (11) eine mittlere Partikelgröße < 200 µm, bevorzugt < 100 µm, noch bevorzugter < 50 µm aufweisen, die Partikelgröße wird nach DIN ISO 13320-1 bestimmt.

9. Verwendung nach einem der Ansprüche 7 oder 8, **dadurch gekennzeichnet, dass** das SES-Hartmetall-Pulver ein mittels des Zink-Recycling-Prozesses recyceltes Hartmetall-Pulver ist.

## Claims

1. A method for layerwise production of a cemented carbide body (9) by layerwise solidification at positions corresponding to the cross-section of the cemented carbide body (9) in the respective layer, the method comprising the steps:
successive layerwise production of a three-dimensional cemented carbide body (9) by alternating layerwise application of a cemented carbide powder (10) and selective local solidification of the applied cemented carbide powder (10) by means of a directed energy beam (6),
wherein the cemented carbide powder (10) has particles (11) having a sintered WC-binder metal structure,
**characterized in that** the particles (11) comprise at least Cr and V, the cemented carbide powder (10) has a Cr content of 0.05-2.0 wt.-% and a V content of 0.01-1 wt.-% and the Cr content in wt.-% is at least twice of the V content in wt.-%.

2. The method according to claim 1, wherein the binder metal is a cobalt base alloy.

3. The method according to any one of the preceding claims, wherein the cemented carbide powder (10) has a Cr content of 0.1-1.0 wt.-%.

4. The method according to any one of the preceding claims, wherein the cemented carbide powder (10) has a V content of 0.01-0.5 wt.-%.

5. The method according to any one of the preceding claims, wherein the cemented carbide powder (10) is a cemented carbide powder recycled by means of the zinc recycling process.

6. The method according to any one of the preceding claims, wherein the method further comprises the steps:
removing un-solidified cemented carbide powder (10) and subsequent post-compacting of the three-dimensional cemented carbide body (9).

7. The use of an SES cemented carbide powder (10), SES = selective energy beam sintering, for generating a three-dimensional cemented carbide body (9) by layerwise solidification at positions corresponding to the cross-section of the cemented carbide body (9) in the respective layer by means of a directed energy beam (6), wherein the SES cemented carbide powder comprises particles (11) having a sintered WC-binder metal structure,
**characterized in that** the particles (11) comprise at least Cr and V, the cemented carbide powder (10) has a Cr content of 0.05-2.0 wt.-% and a V content of 0.01-1 wt.-%, and the Cr content in wt.-% is at least twice of the V content in wt.-%.

8. The use according to claim 7, wherein the particles (11) have a mean particle size < 200 µm, preferably < 100, more preferably < 50 µm, the particle size being determined in accordance with DIN ISO 13320-1.

9. The use according to any one of claims 7 and 8, **characterized in that** the SES cemented carbide powder is a cemented carbide powder recycled by means of the zinc recycling process.

## Revendications

1. Procédé pour la préparation par couches d'un corps (9) en métal dur par solidification par couches au niveau des endroits de la section transversale du corps en métal dur (9) dans la couche respective, comportant les étapes de :
création successive, par couches d'un corps (9) tridimensionnel en métal dur par dépôt en alternance par couches d'une poudre (10) de métal dur et solidification sélectif, local de la poudre (10) de métal dur déposée par action d'un rayonnement d'énergie (6) dirigé,
la poudre (10) de métal dur présentant des particules (11) dotées d'une structure de type CT - métal liant (CT = carbure de tungstène) réunies par frittage,
**caractérisé en ce que** les particules (11) présentent au moins Cr et V, la poudre (10) de métal dur présente une teneur en Cr de 0,05 à 2,0 % en poids et une teneur en V de 0,01 à 1 % en poids et la teneur en Cr en % en poids est au moins deux fois plus grande que la teneur en V en % en poids.

2. Procédé selon la revendication 1, le métal liant étant un alliage de base au cobalt.

3. Procédé selon l'une quelconque des revendications précédentes, la poudre (10) de métal dur présentant une teneur en Cr de 0,1 à 1,0 % en poids.

4. Procédé selon l'une quelconque des revendications précédentes, la poudre (10) de métal dur présentant une teneur en V de 0,01 à 0,5 % en poids.

5. Procédé selon l'une quelconque des revendications précédentes, la poudre (10) de métal dur étant une poudre de métal dur recyclée au moyen du procédé de recyclage au zinc.

6. Procédé selon l'une quelconque des revendications précédentes, le procédé présentant en outre l'étape de :
élimination de poudre (10) de métal dur non solidifiée et post-densification ultérieure du corps (9) tridimensionnel en métal dur.

7. Utilisation d'une poudre (10) en métal dur de type SES, SES = frittage sélectif par rayonnement d'énergie, pour la création d'un corps (9) tridimensionnel en métal dur par solidification par couches au niveau des endroits de la section transversale du corps (9) en métal dur dans la couche respective au moyen d'un rayonnement d'énergie (6) dirigé, la poudre en métal dur de type SES présentant des particules (11) dotées d'une structure de type CT - métal liant réunies par frittage, **caractérisée en ce que** les particules (11) présentent au moins Cr et V, la poudre (10) de métal dur présente une teneur en Cr de 0,05 à 2,0 % en poids et une teneur en V de 0,01 à 1 % en poids et la teneur en Cr en % en poids est au moins deux fois plus grande que la teneur en V en % en poids.

8. Utilisation selon la revendication 7, les particules (11) présentant une grosseur moyenne de particule < 200 µm, préférablement < 100 µm, encore plus préférablement < 50 µm, la grosseur de particule étant déterminée d'après la norme DIN ISO 13320-1.

9. Utilisation selon l'une quelconque des revendications 7 et 8, **caractérisée en ce que** la poudre de métal dur de type SES est une poudre de métal dur recyclée au moyen du procédé de recyclage au zinc.
